# EUROPÄISCHE PATENTSCHRIFT

(11) **EP 2 331 273 B1**
(45) Veröffentlichungstag und Bekanntmachung des Hinweises auf die Patenterteilung: **25.04.2012**
(21) Anmeldenummer: 09775612.6
(22) Anmeldetag: 25.08.2009
(51) Int. Cl.: B21D 5/02, B21D 37/20

(54) **BIEGEWERKZEUG FÜR EINE BLECHBIEGEPRESSE SOWIE VERFAHREN ZU DESSEN HERSTELLUNG**
BENDING TOOL FOR A SHEET BENDING PRESS AND METHOD FOR THE PRODUCTION THEREOF
OUTIL DE CINTRAGE DESTINÉ À UNE PRESSE DE CINTRAGE DE TÔLES ET SON PROCÉDÉ DE RÉALISATION

(30) Priorität: 28.08.2008 AT 13362008
(43) Veröffentlichungstag der Anmeldung: 15.06.2011
(73) Patentinhaber: Trumpf Maschinen Austria GmbH & CO. KG., 4061 Pasching (AT)
(72) Erfinder: FISCHEREDER, Bernhard, A-4870 Vöcklabruck (AT)
(74) Vertreter: Burger, Hannes
(86) Internationale Anmeldenummer: PCT/AT2009/000330
(87) Internationale Veröffentlichungsnummer: WO 2010/022426

(56) Entgegenhaltungen:
- EP-A- 1 741 501
- DE-A1- 4 409 556
- DE-A1- 10 214 055
- FR-A- 2 631 567
- JP-A- 59 163 033
- US-A- 3 474 657
- US-A- 5 878 619

## Beschreibung

Die Erfindung betrifft ein Biegewerkzeug wie es im Oberbegriff des Anspruches 1 beschrieben ist sowie ein Verfahren zur Herstellung des Biegewerkzeuges wie es im Oberbegriff des Anspruches 17 beschrieben ist. Ein solches Biegewerkzeug bzw. ein solches Verfahren ist aus der US-A-3474657 bekannt.

Aus dem Dokument DE 44 09 556 A1 ist ein Biegewerkzeug, insbesondere für das Gesenkbiegen in Form eines Biegestempels und/oder eines Biegegesenkes aus einem Paket zusammengesetzter Lamellen bekannt. Diese sind in Richtung einer Biegeachse des Werkzeuges flächig aneinander gereiht und zum Paket zusammengefügt. Bekannt sind weiters aus diesem Dokument unterschiedliche Verbindungen der Lamellen zur Bildung des Lamellenpakets z.B. Verschraubungen, Verschweißung etc. sowie eine Werkzeugsegmentierung aus einer Spannleiste und einer Profilleiste die sich quer zur Ebene der Lamellen erstrecken und mit diesen u.a. verrastbar verbunden sind.

Aus einem weiteren Dokument, US 5,875,619 A, sind ebenfalls Biegewerkzeuge für eine Biegepresse zum Biegen von Blechwerkteilen, ausgebildet als Biegestempel und Biegegesenk, im Wesentlichen aus Lamellen bestehend, bekannt. Die Lamellen sind flächig aneinander gereiht und zu einem Paket mittels die Lamellen querender Schrauben verbunden. An einander zugewandten Stimendbereichen des den Pressenstempel und das Pressengesenk bildenden Lamellenpakets sind längs einer Biegelinie erstreckend Profilnuten ausgebildet. In diesen sind ein- und längsverschieblich und tauschbar profilierte Einsätze angeordnet von denen einer als V-förmiges Stempelprofil und der weitere als Gesenkprofil mit einer V- Nut ausgebildet ist.

Aufgabe der Erfindung ist es, aus Lamellen zusammengesetzte Biegewerkzeuge zu schaffen, die kostengünstig zu fertigen sind und bei geringer Masse eine hohe Druckfestigkeit für die Aufnahme der bei einem Umformgang eines Werkteils auftretenden Druck- und Biegekräfte aufweisen.

Diese Aufgabe der Erfindung wird durch die im Kennzeichenteil des Anspruches 1 wiedergegebenen Merkmale erreicht. Der überraschende Vorteil darin ist, dass durch die Anwendung einer die Lamellen in ihrem Kernbereich in Durchbrüchen durchsetzenden Schaumstruktur ohne weitere Verbindungsmittel ein dauerhafter Lamellenverbund erreicht wird und die Masse eines so gestalteten Biegewerkzeuges wesentlich unter der Masse eines herkömmlichen Biegewerkzeuges liegt. Damit wird aber auch in vorteilhafter Weise die gesamt zu bewegende Masse des mit Biegewerkzeugen bestückten verstellbaren Pressenbalkens erreicht und Antriebsleistung bzw. Energie für den Antrieb des Pressenbalkens eingespart, wie auch durch die verringerte Masse gegenüber Werkzeugen in Massivbauweise ein ergonomischer Effekt für eine Bedienungskraft beim Umrüstvorgang von Werkzeugsätzen eintritt.

Möglich ist dabei eine Ausbildung nach Anspruch 2, weil dadurch ein kompakter Materialverbund und eine hohe Positioniergenauigkeit der Lamellen zueinander erreicht werden.

Vorteilhaft ist aber auch eine Ausbildung nach Anspruch 3, wodurch eine Paketbildung mit den Lamellen und Einbringung des Kernmaterials in einer Form für eine Wärmebehandlung vereinfacht wird.

Durch die im Anspruch 4 beschriebene vorteilhafte Ausbildung kann entsprechend des vorzusehenden Kernvolumens eine vorgegebene Gewichtsreduktion erreicht werden.

Die im Anspruch 5 beschriebene vorteilhafte Weiterbildung ermöglicht den Einsatz eines hochwertigen Kernmaterials mit dem eine hohe Festigkeit durch eine erzielbare gleichmäßige Raumstruktur erreicht wird.

Vorteilhaft ist aber auch eine Ausbildung nach Anspruch 6, weil durch den Faseraufbau des Kernes der Verzahnungseffekt mit den Lamellen wesentlich erhöht wird.

Aber auch eine Ausbildung nach Anspruch 7 ist vorteilhaft wodurch die Masse des Kernes und damit die Gesamtmasse des Lamellenverbundes wesentlich reduziert wird.

Mögliche vorteilhafte Ausbildungen beschreiben aber auch die Ansprüche 8 bis 11, wodurch der Herstellungsprozess für die Bildung der Leichtbaustruktur als Kernmaterial vereinfacht wird.

Durch die im Anspruch 12 beschriebene vorteilhafte Weiterbildung ist die Relation der unterschiedlichen Materialanteile in weiten Grenzen festlegbar und damit die erforderliche Festigkeit bzw. angestrebte Gewichtsreduktion steuerbar.

Durch die Erfindung sowie durch die in den Ansprüchen 13 und 14 beschriebenen vorteilhaften Ausbildungen, wird ein den Lamellenverbund stabilisierender Verzahnungseffekt in einem Kernbereich erreicht und damit werden die Lamellen einerseits durch ein Schrumpfen des Kernmaterials beim Abkühlen und andererseits durch ein Anhaften am Grundwerkstoff der Lammellen wirkungsvoll und dauerhaft verbunden.

Möglich ist auch eine Ausbildung nach Anspruch 15, weil damit der Anteil des ein höheres Raumgewicht aufweisenden Materials weiter reduziert wird.

Schließlich ist aber auch eine Ausbildung nach Anspruch 16 vorteilhaft wodurch zusätzlich Verbindungsmittel in Bereichen, in denen Durchbrüche in den Lamellen unzweckmäßig sind, für die Stabilität des Lamellenpakets zur Anwendung kommen.

Die Erfindung betrifft aber auch ein Verfahren entsprechend den kennzeichnenden Maßnahmen im Anspruch 17. Der überraschende Vorteil dabei ist, dass nach diesem Verfahren unterschiedlich geformte Biegewerkzeuge in einer wirtschaftlichen und qualitativ hochwertigen Serienproduktion herstellbar sind.

Zum besseren Verständnis der Erfindung wird diese anhand der in den Figuren dargestellten Ausführungsbeispiele näher erläutert.

Es zeigen jeweils in stark schematisch vereinfachter Darstellung:
- Fig. 1: ein erfindungsgemäßes Biegewerkzeug aus zu einem Lamellenpaket verbundener Lamellen, in Ansicht;
- Fig. 2: das Biegewerkzeug in Seitenansicht;
- Fig. 3: eine andere Ausbildung des erfindungsgemäßen Biegewerkzeuges in Ansicht;
- Fig. 4: das Biegewerkzeug geschnitten gemäß den Linien IV-IV in Fig. 3;
- Fig. 5: eine Vorrichtung zur Herstellung des erfindungsgemäßen Biegewerkzeuges in Ansicht, teilweise geschnitten;
- Fig. 6: eine weitere Ausbildung des erfindungsgemäßen Biegewerkzeuges in Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dar gestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

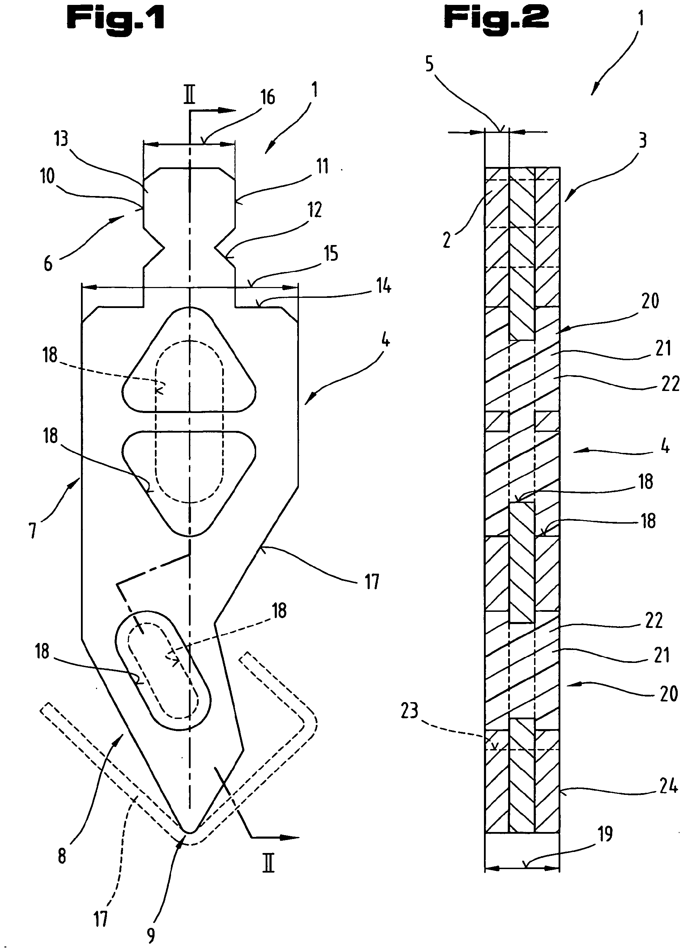

In den Fig. 1 und 2 ist ein Biegewerkzeug 1 für einen Umformvorgang an Blechen für die Fertigung von Werkteilen an Biegepressen, bestehend aus einer Mehrzahl von Lamellen 2 gezeigt. Die Lamellen 2 sind zu einem Lamellenpaket 3 verbunden. Bei dem Biegewerkzeug 1 kann es sich um einen Biegestempel 4, wie beispielshaft gezeigt, oder aber auch um ein Biegegesenk mit einer V- förmigen Biegekulisse, wie noch später gezeigt, handeln. Die zu dem Lamellenpaket 3 verbundenen Lamellen 2 sind aus blechförmigem Werkzeugstahl mit einer vorwählbaren Dicke 5 durch Formschnitte z.B. Laserschneiden, oder auch durch einen Stanzvorgang gebildete Formteile.

Die Lamelle 2 des Lamellenpakets 3 bildet im Wesentlichen drei Bereiche aus, wie einen Spannbereich 6, Kernbereich 7 und Formbereich 8 mit einem keilförmigen Endbereich 9 im Falle des Biegestempels 4.

Den Spannbereich 6 bildet ein an entgegen gesetzten Seitenflächen 10, 11 mit V-förmigen Spannnuten 12 versehener Fortsatz 13 für das Spannen des Biegestempels 4 in einer nicht weiter dargestellten Werkzeugaufnahmevorrichtung der über zu den Seitenflächen 10, 11 rechtwinkelig verlaufenden Schulterflächen 14 in den Kernbereich 7 übergeht, wobei eine Breite 15 größer ist als eine Breite 16 des Fortsatzes 13.

In Richtung des keilförmigen Endbereiches 9 verringert sich die Breite 15 des Kernbereiches durch einen winkeligen Verlauf zumindest einer Seitenfläche 17 zur Schaffung eines Freiraumes für einen umzuformenden Werkteil 17, wie ein solcher in unterbrochenen Linien beispielshaft dargestellt ist.

Im Kernbereich 7 und ggf. auch im Formbereich 8 der Lamelle 2 sind die Dicke 5 durchquerende Durchbrüche 18 vorgesehen, die von unterschiedlicher Formgestaltung, z.B. kreisrund, oval, mehreckig etc. ausgeführt sein können. Bevorzugt weisen die Durchbrüche 18 der zu dem Lamellenpaket 3 flächig aneinander gereihter Lamellen 2 abwechselnd eine unterschiedliche Größe auf, wodurch sich die Lamellen 2 im Bereich der Durchbrüche 18 abwechselnd bereichsweise überlappen. Erreicht werden damit eine Gesamtdicke 19 des Biegewerkzeuges 1 durchquerende Hohlräume 20 in denen zur Verbindung der Lamellen 2 zu dem Lamellenpaket 3 und zur Reduzierung eines Gesamtgewichts des Biegewerkzeuges 1 eine Schaumstruktur 21 als Kern 22 eingebracht ist. Durch die unterschiedliche Größe der Durchbrüche 18 wird eine Verzahnung der Schaumstruktur 21 mit den Einzellamellen 2 erreicht und ein hoher Zusammenhalt der Lamellen 2 und damit des Lamellenpakets 3 bewirkt.

Als Schaumstruktur 21 zur Auffüllung der das Lamellenpaket 3 querenden Hohlräume 20 eignet sich besonders ein sich zwischen entgegen gesetzten Oberflächen 23, 24 erstreckender, bei Temperatureinwirkung aufschäumender und aushärtbarer Metallschaum 25, insbesondere ein Aluminiumschaum aufgrund des geringen Raumgewichts des Materials wie ein solcher aus dem Stand der Technik bekannt ist.

Ein derartiger Aluminiumschaum eignet sich insbesondere für die Herstellung sowohl durchgängig aus diesem Material hergestellter Bauteile wie aber auch in Kombination mit Werkstoffen mit höherem Raumgewicht, zur Erzielung einer hohen Festigkeit bei geringerem Gewicht für einen Bauteil, Werkzeug etc.

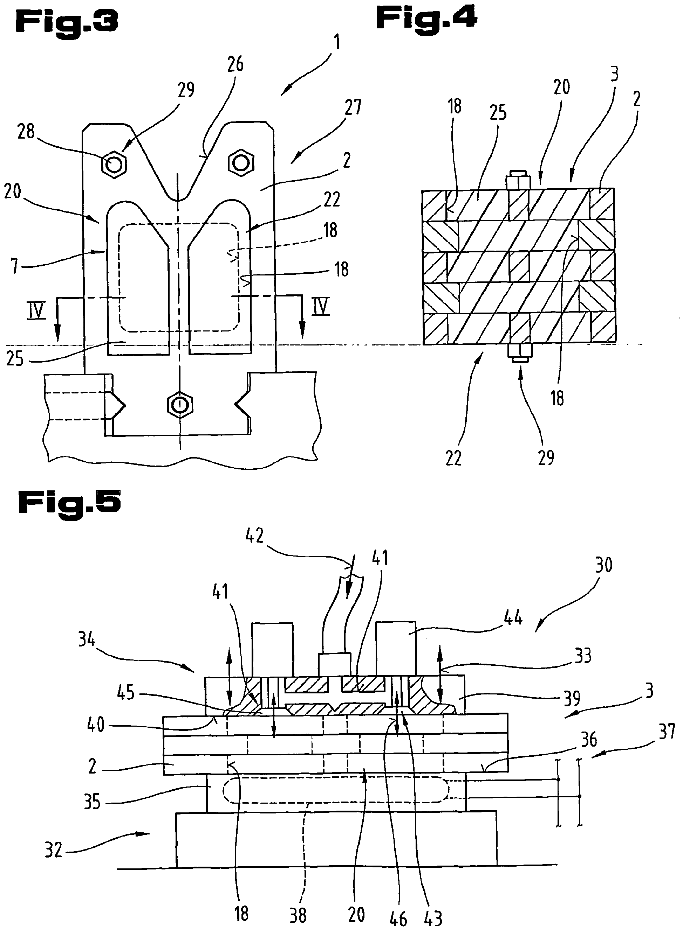

In den Fig. 3 und 4 ist eine weitere und gegebenenfalls für sich eigenständige Ausführungsform des Biegewerkzeuges 1 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Bei dem gezeigten Biegewerkzeug 1 handelt es sich um ein, eine V-Biegekulisse 26 aufweisendes Biegegesenk 27. Dieses besteht ebenfalls aus zu dem Lamellenpaket 3 verbundenen Lamellen 2, die im Kernbereich 7 die Durchbrüche 18 aufweisen und in dem so gebildeten, durchgängigen Hohlraum 20, der Metallschaum 25 eingebracht ist.

Die Durchbrüche 18 sind wie nun der Fig. 4 zu entnehmen, in zwei unterschiedlichen Dimensionen vorgesehen, wobei das Lamellenpaket 3 durch abwechselnde Aneinanderreihung der mit den Durchbrüchen 18 in unterschiedlichen Dimensionen versehenen Lamellen 2 zusammengestellt ist.

Damit ergibt sich ein kompakter Aufbau des Lamellenpakets 3 durch einen Verzahnungseffekt des Kernes 22 aus der Schaumstruktur 21 mit den Lamellen 2.

Weiters kann den Fig. noch entnommen werden, dass zusätzlich zu der Verbindung der Lamellen 2 mit dem Kern 22, z.B. durch das Lamellenpaket 3 querender Schrauben 28, Verbindungsmittel 29 vorgesehen sein können. Derartige, zusätzliche Verbindungsmittel 29 können in besonders exponierten Bereichen des Lamellenpakets 3 angeordnet sein.
In der Fig. 5 ist nun in vereinfachter Darstellung beispielhaft eine Vorrichtung 30 zur Herstellung des Lamellenpakets 3 aus vorgefertigten, mit den Durchbrüchen 18 versehenen Lamellen 2 gezeigt.

Die Vorrichtung besteht beispielhaft aus einem Pressengestell 31 mit einem plattenförmigen Untergestell 32 und einem relativ dazu verstellbaren - gemäß Doppelpfeil 33 - plattenförmigen Obergestell 34. Bevorzugt kann ein derartiges Pressengestell 31 durch ein standardgemäßes aus dem Stand der Technik bekannte Säulenführungsgestell gebildet sein.

Eine Auflageplatte 35 des Untergestells 32 bildet eine plane Auflagefläche 36 und ist mit einem von einem Energienetz 37 beaufschlagbaren Heizelement 38 versehen.

Das relativ dazu verstellbare Obergestell 34 bildet im Wesentlichen eine Pressplatte 39 mit einer dem auf der Auflageplatte 35 des Untergestells 32 aufgelegten, zum Lamellenpaket 3 gestapelten Lamellen 2 zugewandten planen Kontaktfläche 40.

Die Pressplatte 39 weist den Durchbrüchen 18 zugeordnete Zuführkanäle 41 für die Befüllung des durch die Durchbrüche 18 gebildeten Hohlraumes 20, mit einem mit Treibmitteln versetzten Metallpulver - gemäß Pfeil 42 - auf. Die Zuführkanäle 41 sind in Richtung des Hohlraums 20 mittels betätigbarer Ventilanordnungen 43 zum Beispiel über Stellmittel 44 betätigbare Tellerventile 45 öffen- beziehungsweise schließbar - gemäß Pfeil 46.

Die Befüllung des bzw. der Hohlräume 20 erfolgt nach dem Fixieren des Lamellenpakets 3 im Pressengestell 31 mit einem nicht weiter dargestellten Pressenantrieb und Öffnen der Tellerventile 45 durch Druckbefüllung mit dem Metallpulver- gemäß Pfeil 42.

Nach Befüllung des bzw. der Hohlräume 20 und Schließen der Tellerventile 45 erfolgt die Energiebeaufschlagung des Heizelementes 38 über eine vorbestimmte Zeitdauer und eine vorgegebene, materialbedingte Temperatur, wodurch das Metallpulver/ Treibmittelgemenge zur Bildung des Kernes 24 im Hohlraum 20 zur Expansion und Aushärtung gelangt und damit das kompakte Lamellenpaket 3 erreicht wird.

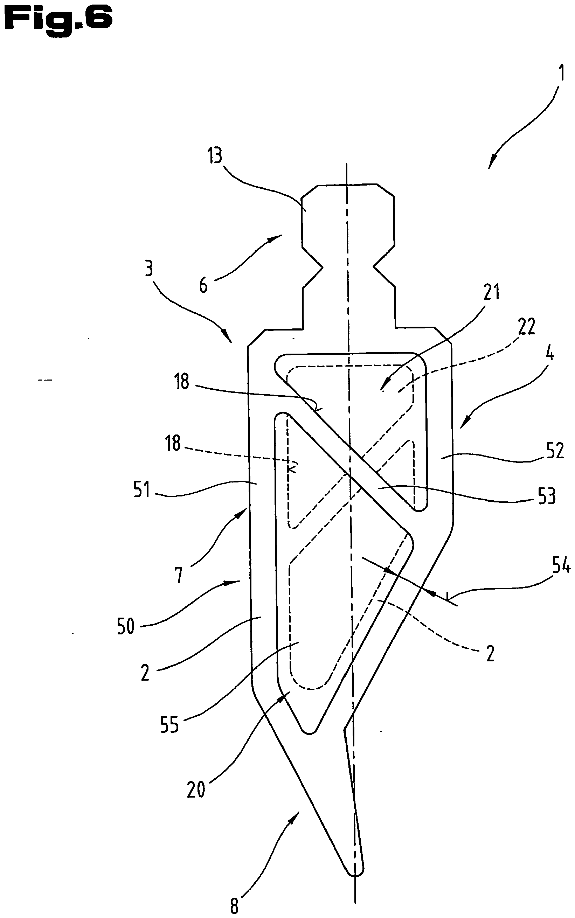

In der Fig. 6 ist eine weitere Ausbildung des Biegewerkzeuges 1, gebildet als Lamellenpaket 3 aus flächig aneinander gereihter und mit der Schaumstruktur 21 in dem durch die Durchbrüchen 18 gebildeten Hohlräumen 20 verbundener Lamellen 2, gezeigt.

In dem Kernbereich 7, der zwischen dem Spannbereich 6 mit dem Fortsatz 13 und dem Formbereich 8 ausgebildet ist, weisen die Lamellen 2 Steggerippe 50 auf, bevorzugt aus parallel und/oder winkelig zueinander verlaufende Stützstege 51, 52 und gegebenen falls diese verbindend zumindest einen Diagonalsteg 53. Diese Ausbildung ermöglicht die Durchbrüche 18 großflächig auszubilden und damit in Verbindung mit der Schaumstruktur 21 ein geringes Gewicht für das Biegewerkzeug 1 bei gleichzeitig hoher Belastbarkeit zu erzielen. Vorteilhaft ist auch das Lamellenpaket 3 aus zwei unterschiedlich, bezüglich einer Breite 54 der Stützstege 51, 52 und/oder der Diagonalstege 53, ausgeführten Lamellen 2, in abwechselnder Reihung zusammen zu setzen, bzw. auch die Diagonalstäbe 53 in gegengleicher Ausrichtung anzuordnen, wie dies der Fig. zu entnehmen ist. Diese Ausbildungen gewährleisten eine hohe Festigkeit im Zusammenhalt der Lamellen durch den Verzahnungseffekt mit der in den Hohlräumen 20 eingebrachten Schaumstruktur 21 aus dem Metallschaum oder einer Kunststoffschaumstruktur 55.

Die Fig. 6 zeigt das Biegewerkzeug 1, ausgebildet als den Biegestempel 4. Selbstverständlich ist die beschriebene Ausbildung auch auf ein Biegegesenk anwendbar.

Die Ausführungsbeispiele zeigen mögliche Ausführungsvarianten des Biegewerkzeuges 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander im Rahmen der Erfindung, wie durch die Patentansprüche definiert möglich sind.

Der Ordnung halber sei abschließend darauf hingewiesen, dass zum besseren Verständnis des Aufbaus des Biegewerkzeuges dieses bzw. dessen Bestandteile teilweise unmaßstäblich und/oder vergrößert und/oder verkleinert dargestellt wurden.

### Bezugszeichenaufstellung

- 1: Biegewerkzeug
- 2: Lamelle
- 3: Lamellenpaket
- 4: Biegestempel
- 5: Dicke

- 6: Spannbereich
- 7: Kernbereich
- 8: Formbereich
- 9: Endbereich
- 10: Seitenfläche

- 11: Seitenfläche
- 12: Spannnut
- 13: Fortsatz
- 14: Schulterfläche
- 15: Breite

- 16: Breite
- 17: Werkteil
- 18: Durchbruch
- 19: Gesamtdicke
- 20: Hohlraum

- 21: Schaumstruktur
- 22: Kern
- 23: Oberfläche
- 24: Oberfläche
- 25: Metallschaum

- 26: V-Kulisse
- 27: Biegegesenk
- 28: Schraube
- 29: Verbindungsmittel
- 30: Vorrichtung

- 31: Pressengestell
- 32: Untergestell
- 33: Doppelpfeil
- 34: Obergestell
- 35: Auflageplatte

- 36: Auflagefläche
- 37: Energienetz
- 38: Heizelement
- 39: Pressplatte
- 40: Kontaktfläche

- 41: Zuführkanal
- 42: Pfeil
- 43: Ventilanordnung
- 44: Stellmittel
- 45: Tellerventil

- 46: Doppelpfeil
- 47:
- 48:
- 49:
- 50: Steggerippe

- 51: Stützsteg
- 52: Stützsteg
- 53: Diagonalsteg
- 54: Breite
- 55: Kunststoff- Schaumstruktur

## Patentansprüche

1. Biegewerkzeug (1) für eine Blechbiegepresse, insbesondere Abkantpresse, für das Gesenkbiegen von aus Blech zu fertigenden Werkteilen (17), mit einer Mehrzahl von flächig aneinander gereihter und miteinander zu einem Lamellenpaket (3) verbundener Lamellen (2), mit einem Spannbereich (6), Kernbereich (7) und einem Formbereich (8), wobei die das Lamellenpaket (3) ausbildenden Lamellen (2) im Wesentlichen in dem Kernbereich (7) Durchbrüche (18) zur Ausbildung eines das Lamellenpaket (3) in Richtung einer Biegeachse durchsetzenden Hohlraumes (20) aufweisen in dem ein Kern (22) aus einer Schaumstruktur (21) angeordnet ist, **dadurch gekennzeichnet, dass** die Durchbrüche (18) in den jeweils benachbarten Lamellen (2) zueinander flächenversetzt, zumindest einander überlappend angeordnet sind.

2. Biegewerkzeug (1) nach Anspruch 1, **dadurch gekennzeichnet, dass** der Kern (22) durch einen unter Temperatureinwirkung expandier- und aushärtbaren Metallschaum (25) gebildet ist.

3. Biegewerkzeug (1) nach Anspruch 1 oder 2, **dadurch gekennzeichnet, dass** sich der in den Durchbrüchen (18) angeordnete Kern (22) zwischen das Lamellenpaket (3) beidseits begrenzenden Oberflächen (23, 24) erstreckt.

4. Biegewerkzeug (1) nach einem der vorhergehenden Ansprüche, **dadurch gekennzeichnet, dass** ein Raumgewicht des Materials des Kerns (22) kleiner ist als ein Raumgewicht des Materials der Lamellen (2).

5. Biegewerkzeug (1) nach einem der vorhergehenden Ansprüche, **dadurch gekennzeichnet, dass** der Kern (22) durch ein mit einem Treibmittel versetztes Aluminiumpulver bebildet ist.

6. Biegewerkzeug (1) nach einem der vorhergehenden Ansprüche, **dadurch gekennzeichnet, dass** der Kern (22) durch eine metallische, bei erhöhter Temperatur expandierende, Faserstruktur gebildet ist.

7. Biegewerkzeug (1) nach einem der vorhergehenden Ansprüche, **dadurch gekennzeichnet, dass** der Kern (22) durch metallbeschichtete, bei erhöhter Temperatur zu Hohlkugeln expandierende, Kugelkörper gebildet ist.

8. Biegewerkzeug (1) nach Anspruch 1, **dadurch gekennzeichnet, dass** der Kern (22) durch einen Kunststoffschaurn gebildet ist.

9. Biegewerkzeug (1) nach Anspruch 6, **dadurch gekennzeichnet, dass** der Kunststoffschaum durch eine Kunststofffasermatrix gebildet ist.

10. Biegewerkzeug (1) nach Anspruch 7, **dadurch gekennzeichnet, dass** die Kunststofffasermatrix bevorzugt aus PA, PE etc. mit einem Kohlefaseranteil gebildet ist.

11. Biegewerkzeug (1) nach Anspruch 7, **dadurch gekennzeichnet, dass** die Kunststofffasermatrix bevorzugt aus PA, PE etc. mit einem Metallfaseranteil gebildet ist.

12. Biegewerkzeug (1) nach Anspruch 1, **dadurch gekennzeichnet, dass** die Durchbrüche (18) einen Flächenanteil zwischen 10% und 80% einer Oberfläche (22, 23) der Lamelle (2) beträgt.

13. Biegewerkzeug (1) nach Anspruch 1, **dadurch gekennzeichnet, dass** die Durchbrüche (18) durch Bohrungen, mehreckige regel- oder unregelmäßige Ausschnitte gebildet sind.

14. Biegewerkzeug (1) nach Anspruch 1, **dadurch gekennzeichnet, dass** die Lamellen (2) mit mehreren über deren Fläche verteilter Durchbrüche (18) versehen sind.

15. Biegewerkzeug (1) nach Anspruch 1, **dadurch gekennzeichnet, dass** die Lamellen (2) in dem Kernbereich (7) als Steggerippe (50) ausgebildet sind.

16. Biegewerkzeug (1) nach Anspruch 1, **dadurch gekennzeichnet, dass** in dem Lamellenpaket (3) zusätzlich zu dem Kern (22) zumindest ein, das Lamellenpaket (3) in Richtung der Biegeachse durchsetzendes, Verbindungsnüttel (29) angeordnet ist.

17. Verfahren zur Herstellung eines Biegewerkzeuges (1) nach einem der Ansprüche 1 bis 17, **dadurch gekennzeichnet, dass** zur Bildung des Lamellenpakets (3) vorgefertigte und mit Durchbrüchen versehene Lamellen (2) in einem Pressengestell (31) flächig aufeinander gestapelt werden, wobei die Lamellen (2) in abwechselnder Reihenfolge mir unterschiedlich dimensionierten Durchbrüchen (18), die sich bereichsweise überlappen gestapelt werden wonach das Lamellenpaket (3) zwischen einer Auflageplatte (35) und einer Pressplatte (39) gespannt wird und über in der Auflageplatte (35) oder der Pressplatte (39) angeordnete Zufiihrkanäle (41) und Ventilanordnungen (43) die durch die Durchbrüche (18) gebildeten Hohlräume (20) mit der Schaumstruktur (21) befüllt werden und anschließend das Lamellenpaket (3) mit der Schaumstruktur (21) während eines vorbestimmbaren Zeitintervalls mit einervorgegebenen Temperatur beaufschlagt wird und anschließend dem Pressengestell (31) entnommen wird.

## Claims

1. Bending tool (1) for a sheet bending press for die-bending workpieces (17) from sheet material, in particular a press brake, with a plurality of dies (2) aligned with their surfaces one against the other in a row and connected to one another to form a die set (3), with a clamping region (6), a core region (7) and a forming region (8), and the dies (2) making up the die set (3) have orifices (18) essentially in the core region (7) in order to form a cavity (20) extending through the die set (3) in the direction of a bending axis in which a core (22) made from a foam structure (21) is disposed, **characterised in that** the orifices (18) in each of the adjacent dies (2) are disposed at least overlapping one another with their surfaces offset from one another.

2. Bending tool (1) as claimed in claim 1, **characterised in that** the core (22) is made from a metal foam (25) which is able to expand and set under the effect of temperature.

3. Bending tool (1) as claimed in claim 1 or 2, **characterised in that** the core (22) disposed in the orifices (18) extends between surfaces (23, 24) delimiting the die set (3) at the two ends.

4. Bending tool (1) as claimed in one of the preceding claims, **characterised in that** a weight by volume of the material of the core (22) is lower than a weight by volume of the material of the dies (2).

5. Bending tool (1) as claimed in one of the preceding claims, **characterised in that** the core (22) is made from an aluminium powder containing a propellant.

6. Bending tool (1) as claimed in one of the preceding claims, **characterised in that** the core (22) is made from a metallic fibre structure which expands at increased temperature.

7. Bending tool (1) as claimed in one of the preceding claims, **characterised in that** the core (22) is made from metal-coated spheres which expand to form hollow spheres at increased temperature.

8. Bending tool (1) as claimed in claim 1, **characterised in that** the core (22) is made from a synthetic foam.

9. Bending tool (1) as claimed in claim 6, **characterised in that** the synthetic foam is formed from a synthetic fibre matrix.

10. Bending tool (1) as claimed in claim 7, **characterised in that** the synthetic fibre matrix is preferably made from PA, PE, etc., with a proportion of carbon fibre.

11. Bending tool (1) as claimed in claim 7, **characterised in that** the synthetic fibre matrix is preferably made from PA, PE, etc., with a proportion of metal fibre.

12. Bending tool (1) as claimed in claim 1, **characterised in that** the orifices (18) occupy a surface portion of between 10% and 80% of a surface (22, 23) of the die (2).

13. Bending tool (1) as claimed in claim 1, **characterised in that** the orifices (18) are formed by bores, polygonal, regular or irregular cut-outs.

14. Bending tool (1) as claimed in claim 1, **characterised in that** the dies (2) are provided with several orifices (18) distributed around their surface.

15. Bending tool (1) as claimed in claim 1, **characterised in that** the dies (2) are designed as a webbed rib (50) in the core region (7).

16. Bending tool (1) as claimed in claim 1, **characterised in that** at least one connecting means (29) extending through the die set (3) in the direction of the bending axis is disposed in the die set (3) in addition to the core (22).

17. Method of producing a bending tool (1) as claimed in one of claims 1 to 17, **characterised in that** prefabricated dies (2) provided with orifices are stacked with their surfaces one against the other in a press frame (31) in order to make up the die set (3), and the dies (2) are stacked with their differently dimensioned orifices (18) which overlap with one another in certain regions in an alternating sequence, after which the die set (3) is clamped between a bed plate (35) and a press plate (39) and the cavities (20) formed by the orifices (18) are filled with the foam structure (21) through inlet passages (41) and valve arrangements (43) disposed in the bed plate (35) or press plate (39), and the die set (3) with the foam structure (21) is then exposed to a predefined temperature for a pre-definable period and then removed from the press frame (31).

## Revendications

1. Outil de cintrage (1) pour une presse de cintrage de tôles, en particulier presse plieuse, pour plier par la presse des pièces (17) à fabriquer en tôle, avec une pluralité de lamelles (2) rangées d'une manière plane les unes à côté des autres et reliées les unes avec les autres en un paquet de lamelles (3), avec une zone de serrage (6), une zone d'âme (7) et une zone de moule (8), où les lamelles (2) formant le paquet de lamelles (3) présentent essentiellement dans la zone d'âme (7) des perçages (18) pour la réalisation d'un espace creux (20) traversant le paquet de lamelles (3) dans la direction d'un axe de pliage, dans lequel est disposée une âme (22) en une structure de mousse (21), **caractérisé en ce que** les perçages (18) dans les lamelles (2) respectivement avoisinantes sont disposés d'une manière décalée les uns relativement aux autres, au moins en se chevauchant.

2. Outil de cintrage (1) selon la revendication 1, **caractérisé en ce que** l'âme (22) est formée par une mousse métallique (25) apte à s'expanser et à durcir sous l'effet de la température.

3. Outil de cintrage (1) selon la revendication 1 ou 2, **caractérisé en ce que** l'âme (22) disposée dans les perçages (18) s'étend entre des surfaces (23, 24) délimitant le paquet de lamelles (3) des deux côtés.

4. Outil de cintrage (1) selon l'une des revendications précédentes, **caractérisé en ce qu'**un poids spatial du matériau de l'âme (22) est plus petit qu'un poids spatial du matériau des lamelles (2).

5. Outil de cintrage (1) selon l'une des revendications précédentes, **caractérisé en ce que** l'âme (22) est formée par une poudre d'aluminium mélangée avec un agent propulseur.

6. Outil de cintrage (1) selon l'une des revendications précédentes, **caractérisé en ce que** l'âme (22) est formée par une structure de fibres métallique, apte à s'expanser à une température plus élevée.

7. Outil de cintrage (1) selon l'une des revendications précédentes, **caractérisé en ce que** l'âme (22) est formée par des corps sphériques revêtus de métal, s'expansant lors d'une température augmentée en billes creuses.

8. Outil de cintrage (1) selon la revendication 1, **caractérisé en ce que** l'âme (22) est formée par une mousse de matériau synthétique.

9. Outil de cintrage (1) selon la revendication 6, **caractérisé en ce que** la mousse de matériau synthétique est formée par une matrice de fibres de matériau synthétique.

10. Outil de cintrage (1) selon la revendication 7, **caractérisé en ce que** la matrice de fibres de matériau synthétique est réalisée de préférence en PA, PE etc. avec une part en fibres de carbone.

11. Outil de cintrage (1) selon la revendication 7, **caractérisé en ce que** la matrice de fibres de matériau synthétique est réalisée de préférence en PA, PE etc. avec une part de fibres métalliques.

12. Outil de cintrage (1) selon la revendication 1, **caractérisé en ce que** les perçages (18) représentent une part de face entre 10% et 80% d'une surface (22, 23) des lamelles (2).

13. Outil de cintrage (1) selon la revendication 1, **caractérisé en ce que** les perçages (18) sont formés par des alésages, des découpures régulières ou irrégulières polygones.

14. Outil de cintrage (1) selon la revendication 1, **caractérisé en ce que** les lamelles (2) sont pourvues de plusieurs perçages (18) répartis sur leur face.

15. Outil de cintrage (1) selon la revendication 1, **caractérisé en ce que** les lamelles (2) sont réalisées dans la zone d'âme (7) comme structure à nervures (50).

16. Outil de cintrage (1) selon la revendication 1, **caractérisé en ce qu'**est disposé dans le paquet de lamelles (3) en plus de l'âme (22), au moins un moyen de liaison (29) traversant le paquet de lamelles (3) dans la direction de l'axe de pliage.

17. Procédé de fabrication d'un outil de cintrage (1) selon l'une des revendications 1 à 17, **caractérisé en ce que** pour la formation du paquet de lamelles (3), des lamelles préfabriquées et pourvues de perçages (2) sont empilées d'une manière plane les unes sur les autres dans un bâti de presse (31), où les lamelles (2) sont empilées selon une succession alternante avec des perçages (18) dimensionnés différemment, qui se chevauchent par zones, à la suite de quoi le paquet de lamelles (3) est serré entre une plaque d'appui (35) et une plaque de presse (39) et, par des canaux d'amenée (41) et agencements de vanne (43) disposés dans la plaque d'appui (35) ou la plaque de presse (39), les espaces creux (20) formés par les perçages (18) sont remplis avec la structure de mousse (21), et ensuite, le paquet de lamelles (3) avec la structure de mousse (21) est sollicité pendant un intervalle de temps prédéfini avec une température prédéterminée et est retiré ensuite du bâti de presse (31).
